# EUROPEAN PATENT APPLICATION

(11) **EP 1 942 025 A1**
(43) Date of publication of application: **09.07.2008**
(21) Application number: 07100111.9
(22) Date of filing: 04.01.2007
(51) Int. Cl.: B60J 5/10

(54) **Vehicle tailgate arrangement**

(71) Applicant: Ford Global Technologies, LLC, Dearborn, MI 48126 (US)
(72) Inventor: Mattin, Stephen, 411 24, Göteborg (SE); Ljungqvist, Gustaf, 423 39, Torslanda (SE)
(74) Representative: Valea AB

(57) **Abstract**

A vehicle tailgate arrangement (10) having an upper tailgate lid (12) and a lower tailgate lid (14). The arrangement is operable between a closed position and an open position to thereby access a load area in the vehicle. During opening, the lower tailgate lid (14) is arranged to be brought into overlapping relationship with the upper tailgate lid (12) so that the lower tailgate lid can be carried by the upper tailgate lid during pivotal displacement of the upper tailgate lid.

## Description

### TECHNICAL FIELD

The present invention relates to a vehicle tailgate arrangement comprising an upper tailgate lid and a lower tailgate lid, the arrangement being operable between a closed position and an open position to thereby access a load area in the vehicle.

### BACKGROUND OF THE INVENTION

A conventional hatchback or estate car is provided with a one-piece tailgate which is pivotally supported by the roof structure of the vehicle. In its open position, the tailgate allows substantially unimpeded access to the load area in the vehicle, such that a person need only reach over the rear bumper assembly of the vehicle to access the load area.

A one-piece tailgate nevertheless suffers from a number of disadvantages. Firstly, even if only a small object is to be placed in, or removed from, the load area, the entire tailgate has to be opened. Secondly, when opening the tailgate, loose objects in the load area may fall out, particularly if the tailgate extends all the way to the load area floor. Thirdly, due to the fact that the tailgate is pivotally supported by the roof structure of the vehicle, it has to be ensured that, when opening the tailgate, there is adequate space behind and above the vehicle to accommodate the swing radius of the tailgate.

The above problems are at least partially addressed by a so-called split tailgate. A split tailgate comprises an upper tailgate lid which is pivotally supported by the roof structure of the vehicle and a lower tailgate lid which is pivotally supported in the load area floor region. Typically, the upper tailgate lid includes the rear window. The upper tailgate lid can be opened independently of the lower tailgate lid. This implies that small objects can be placed in the load area without having to open the entire tailgate. Furthermore, since the lower tailgate remains in its closed position, loose articles on the load area floor are less likely to fall out of the vehicle. In addition, the swing radius of the upper tailgate lid is less than that of a one-piece tailgate, thereby implying that less space is needed to accommodate the swing radius of the upper tailgate lid.

However, a split tailgate also suffers from several disadvantages. These include the fact that two separate operations are required to completely open the tailgate. In addition, when open the lower tailgate lid extends beyond the rear bumper assembly, thereby taking up space and rendering more difficult access to the load area. Furthermore, the upper tailgate lid has to be opened before the lower tailgate lid can be opened.

### SUMMARY OF THE INVENTION

It is therefore an object of the present invention to provide a vehicle tailgate arrangement which overcomes one or more of the disadvantages associated with conventional vehicle tailgates.

More particularly, an object of the invention is to provide a compact tailgate arrangement which provides the convenience of multiple opening modes.

Thus, the present invention provides for a vehicle tailgate arrangement as claimed in claim 1. In accordance with the invention, during opening, the lower tailgate lid is arranged to be brought into overlapping relationship with the upper tailgate lid.

Thus, the upper tailgate lid and the lower tailgate lid each has an exterior-facing surface and an interior-facing surface By the expression "overlapping relationship" it is meant that normals to the interior-facing surface of the lower tailgate will intersect the exterior-facing surface of the upper tailgate lid over at least 30 % of the surface of the lower tailgate lid.

Since, in accordance with the invention, the lower tailgate lid is brought into overlapping relationship with the upper tailgate lid, access can be gained to the load area of the vehicle without having to reach over the lower tailgate lid.

In one aspect of the invention, the upper tailgate lid has a first transverse edge and a second transverse edge, the lower tailgate lid has a first transverse edge and a second transverse edge. The second transverse edge of the upper tailgate lid is adjacent the second transverse edge of the lower tailgate lid when the tailgate arrangement is in its closed position, with the upper tailgate lid being pivotally supported to the vehicle about its first transverse edge. This arrangement implies that the upper tailgate lid may be made to be pivotal about its first transverse edge prior to displacement of the lower tailgate lid. In this manner, small items may be placed in the load area of the vehicle without having to open the entire tailgate arrangement.

In a further aspect of the invention, the upper tailgate lid is pivotal about its first transverse edge when the lower tailgate lid is in overlapping relationship with the upper tailgate lid. This means that the swing radius of the tailgate arrangement is less than that of a corresponding one-piece tailgate.

It is a further object of the invention to provide a method of opening a vehicle tailgate arrangement.

This object is achieved by a method of opening a vehicle tailgate arrangement, the arrangement comprising an upper tailgate lid having a first transverse edge and a second transverse edge, and a lower tailgate lid having a first transverse edge and a second transverse edge, the upper tailgate lid being arranged for pivotal displacement about its first transverse edge. The method comprises the steps of bringing the lower tailgate lid into overlapping relationship with the upper tailgate lid, and effecting pivotal displacement of the upper tailgate lid about its first transverse edge.

In one aspect of the method, the step of bringing the lower tailgate lid into overlapping relationship with the upper tailgate lid comprises the substeps of effecting a lateral displacement of the lower tailgate lid such that the second transverse edge of the lower tailgate lid becomes offset relative to the second transverse edge of the upper tailgate lid, and effecting an axial displacement of the lower tailgate lid such that the lower tailgate lid adopts an overlapping relationship with the upper tailgate lid.

Advantageous embodiments of the tailgate arrangement and the method of opening a vehicle tailgate arrangement are detailed in the respective dependent claims.

### BRIEF DESCRIPTION OF THE DRAWINGS

The invention will be described in the following by way of example only with reference to the attached drawings, in which
- Fig. 1: is a partly sectioned perspective view of a vehicle tailgate arrangement according to one embodiment of the present invention with the tailgate arrangement in its fully closed position;
- Fig. 2: is a view corresponding to Fig. 1 though with the lower tailgate lid in its initial open position;
- Fig. 3: is a view corresponding to Fig. 1 though with the lower tailgate lid in a position immediately prior to being received by the upper tailgate lid;
- Fig. 4: is a view corresponding to Fig. 1 though with the lower tailgate lid in a position immediately subsequent to being received by the upper tailgate lid;
- Fig. 5: is a view corresponding to Fig. 1 though with the tailgate arrangement in its fully open position;
- Figs. 6 to 9: illustrate the closing operation of the tailgate arrangement;
- Fig. 10: is a perspective view of a displaceable platform carrying the lower tailgate lid, with the lower tailgate lid in its fully closed position;
- Fig. 11: is a perspective view corresponding to Fig. 10, though with the lower tailgate lid in its initial open position;
- Fig. 12: is a perspective view of the lower tailgate lid as it approaches the upper tailgate lid, and

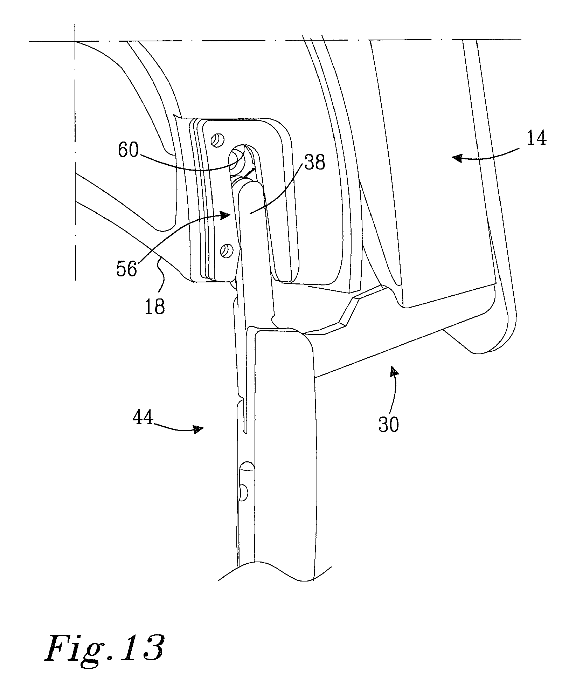

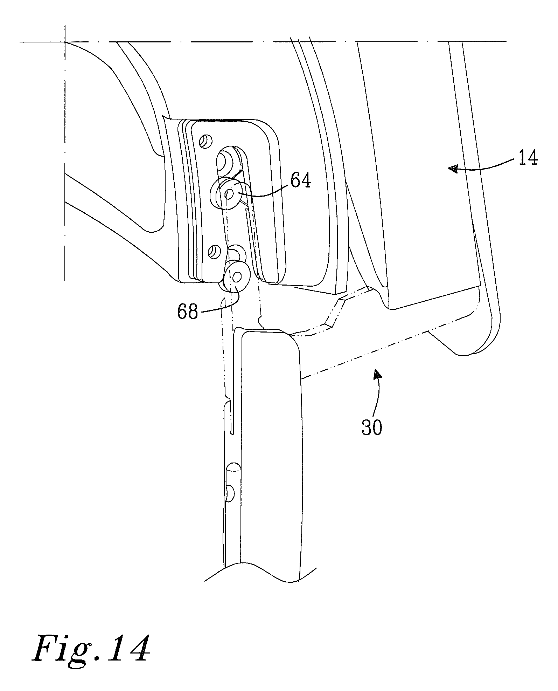

- Figs. 13 to 20: are detailed perspective views showing how the lower tailgate lid is handed over to the upper tailgate lid.

### DETAILED DESCRIPTION OF PREFERRED EMBODIMENTS

In the drawings, reference number 10 generally denotes a vehicle tailgate arrangement according to the present invention.

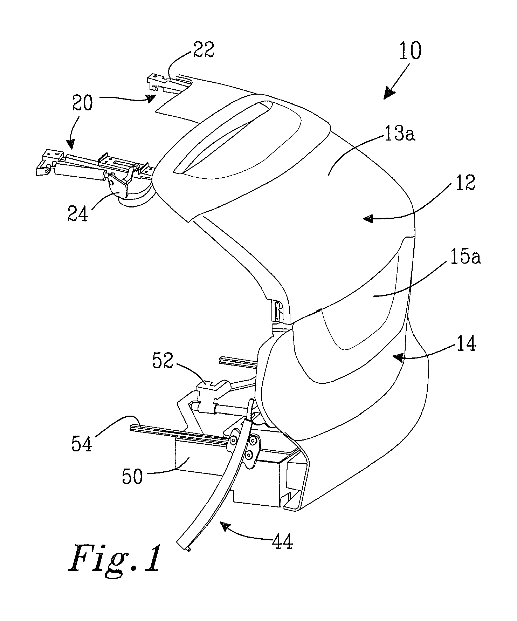

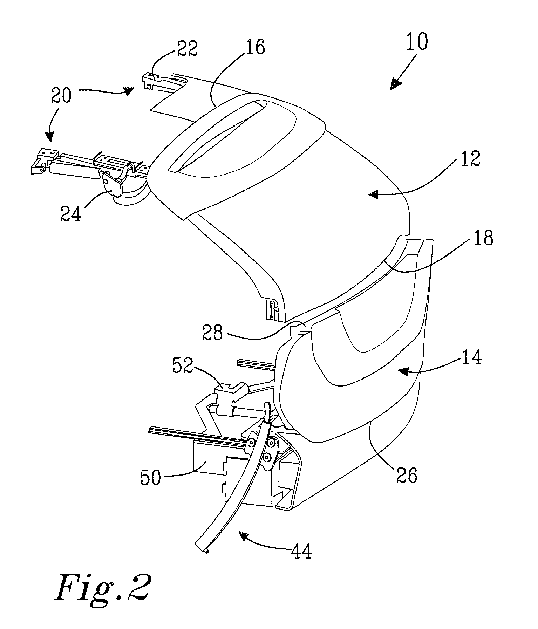

The tailgate arrangement of the present invention is a so-called split tailgate which is constituted by an upper tailgate lid 12 having an exterior-facing surface 13a and an interior-facing surface 13b and a lower tailgate lid 14 having an exterior-facing surface 15a and an interior-facing surface 15b. As is more clearly visible from Fig. 2, the upper tailgate lid has a first transverse edge 16 and a second transverse edge 18, with the upper tailgate lid 12 being pivotally supported to the vehicle about its first transverse edge 16. Thus, and as will be described in greater detail in the following, the upper tailgate lid 12 may be pivoted about its first transverse edge 16 by means of a hinge arrangement 20. The hinge arrangement 20 includes first and second hinge assemblies 22, 24 mounted to the vehicle body, for example to the roof structure. The first and second hinge assemblies may be conventional pivot hinges or may preferably be powered in a manner known per se. The lower tailgate lid 14 also has a first transverse edge 26 and a second transverse edge 28, with the second transverse edge 18 of the upper tailgate lid 12 being adjacent the second transverse edge 28 of the lower tailgate lid 14 when the tailgate arrangement is in its fully closed position, corresponding to that illustrated in Fig. 1.

In a first opening mode, the upper tailgate lid 12 can be caused to pivot about its first transverse edge 16 by means of the first and second hinge assemblies 22, 24 to thereby allow the upper tailgate lid to open whilst the lower tailgate lid 14 remains in its fully closed position. In this first opening mode, small objects can be placed in the (not shown) load area of the vehicle without having to open the entire tailgate arrangement.

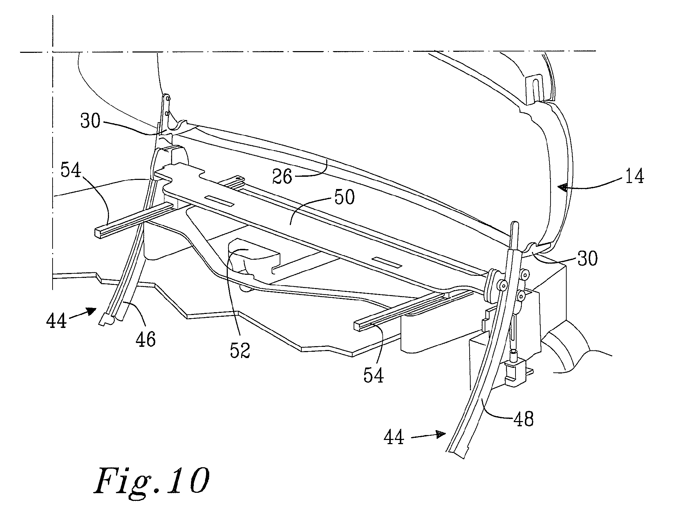

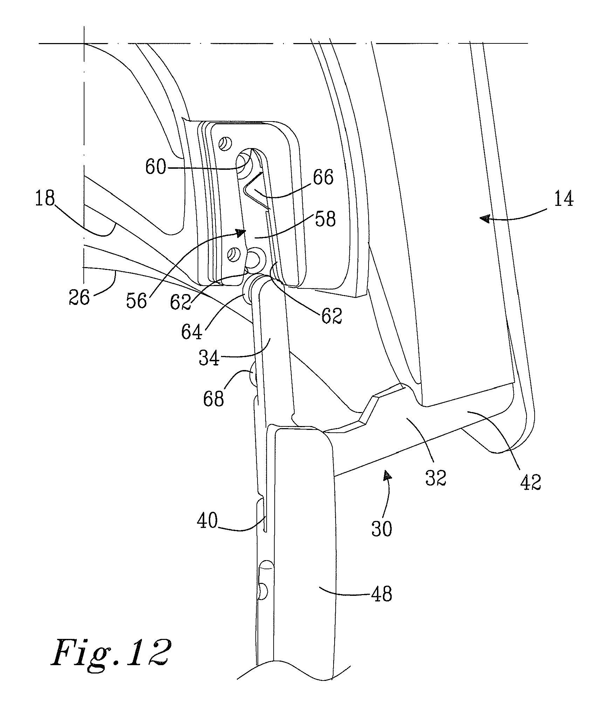

Opening of the entire tailgate arrangement 10 is attained by means of particular control of the displacement of the lower tailgate lid 14 with respect to the upper tailgate lid 12. To this effect, and as is most clearly illustrated in Figs. 10 and 12, the lower tailgate lid is provided in the vicinity of its first transverse edge 26 with a pair of handover brackets 30. Each handover bracket 30 is in the form of an essentially T-shaped element having a first leg 32 and a second leg 34. As is depicted in Figs. 12, 17 and 18, the first leg 32 meets the second leg 34 at an intersection 36 such that the second leg 34 extends either side of the intersection to form an insertion end 38 and a coupling end 40. The first leg 32 has a distal end region 42 which is permanently attached to the lower tailgate lid 14. The first leg 32 has a length such that the second leg 34 is spaced from the lower tailgate lid 14 by a distance corresponding to slightly more than the thickness of the upper tailgate lid. This distance is typically between 70 and 100 mm.

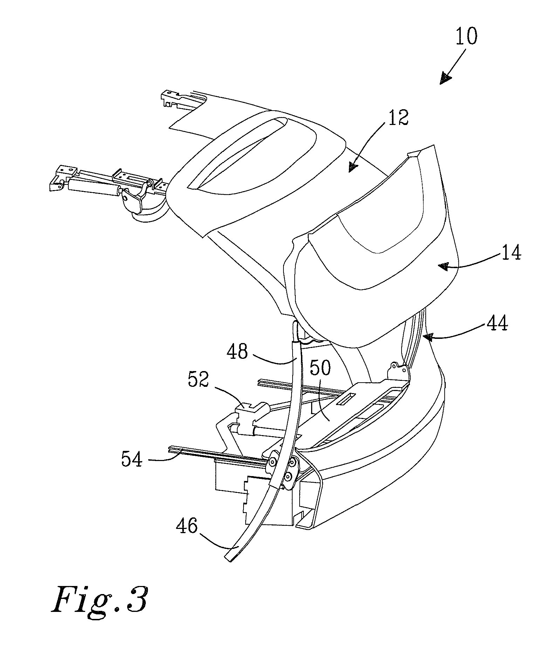

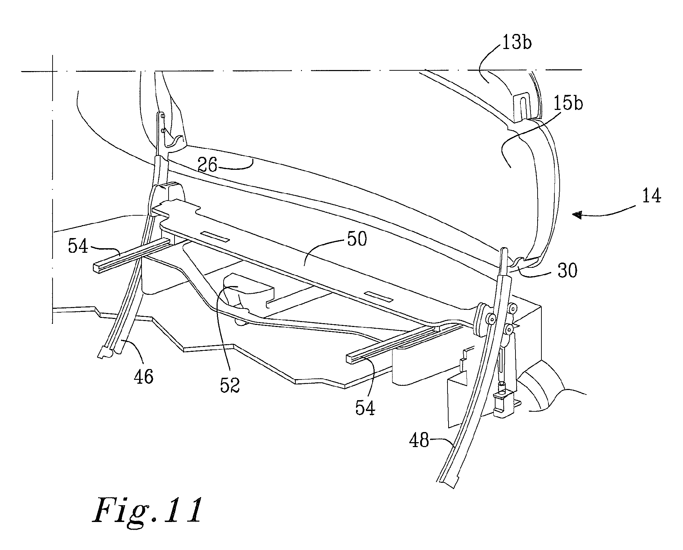

In the fully closed position of the tailgate arrangement, as illustrated in Figs. 1 and 10, the coupling end 40 of each handover bracket 30 cooperates with a respective guide rail 44. Each guide rail 44 has a fixed rail 46 and a slide 48, with the slide 48 being arranged for displacement along the fixed rail 46 from a retracted position as illustrated in e.g. Fig. 1 to an extended position as illustrated in e.g. Fig. 3. With particular reference to Figs. 10 and 11, the fixed rails 46 are attached to either end of a displaceable platform 50. Displacement of the slide 48 along the fixed rail 46 of the guide rail 46 may be attained for example by a not-shown rack-and-pinion arrangement in which the slide is provided along its length with a rack which is acted on by a motor-driven pinion carried by the platform 50.The displaceable platform 50 is typically mounted beneath the (not shown) floor of the load area of the vehicle and is acted on by an actuator 52 to cause lateral displacement of the platform along a pair of guide tracks 54 extending substantially in the length direction of the vehicle. The coupling end 40 of each handover bracket 30 is releasably coupled to the slide 48 of its respective guide rail 44. Thus, since the fixed rails 46 are attached to the platform 50 and the slides 48 are arranged for displacement along the fixed rails 46, displacement of the platform 50 along the pair of guide tracks 54 will cause a corresponding displacement of the slides 48. Since the slides are coupled to the pair of handover brackets 30, displacement of the platform will also cause the handover brackets, and hence the lower tailgate lid 14, to be displaced.

In the fully closed position of the tailgate arrangement, as illustrated in Figs. 1 and 10, the second transverse edges 18, 28 of the upper and lower tailgate lids occupy a first vertical plane. Displacement of the platform 50 along the pair of guide tracks 54 will effect a lateral displacement of the lower tailgate lid 14 in a direction substantially perpendicular to the first vertical plane such that the lower tailgate lid adopts the position illustrated in Fig. 11. This lateral displacement corresponds to a first opening phase of the tailgate arrangement 10 in which the lower tailgate lid 14 is slid outwards a distance sufficient to clear the upper tailgate lid 12.

Subsequent to the first opening phase, the lower tailgate lid 14 is arranged to undergo an axial displacement during a second opening phase so that the lower tailgate lid can be brought into overlapping relationship with the upper tailgate lid 12. Thus, and as is illustrated in Fig. 3, the slides 48 of the guide rails 44 are caused to slide along the fixed rails 46 from the retracted position shown in Fig. 2 to an extended position at which the lower tailgate lid is handed over to the upper tailgate lid. In order to impart the desired axial displacement of the lower tailgate lid 14, the guide rails 44 may be slightly curved, i.e. non-rectilinear. During the axial displacement, at least an area of the interior-facing surface 15b of the lower tailgate lid passes over a region of the exterior-facing surface 13a of the upper tailgate lid.

Handing over of the lower tailgate lid 14 to the upper tailgate lid 12 is effected in the following manner.

With particular reference to Fig. 12, the upper tailgate lid 12 is provided with a pair of locking slots 56 in the vicinity of the second transverse edge 18. In the closed position of the upper tailgate lid the locking slots 56 extend in a substantially vertical direction and present a downwardly facing opening 58 and an abutment base 60. The locking slots 56 are dimensioned to receive the second legs 34 of the handover brackets 30 when the slides 48 of the guide rails 44 are in their extended position. To facilitate introduction of the second legs into the locking slots 56, the downwardly facing opening 58 of each slot may be delimited by a pair of tapered side walls 62 which serve to steer a first guide element 64, for example in the form of a roller, positioned at the distal end of the second leg 34 into the locking slot such that the first guide element 64 abuts against the abutment base 60 when the slide 48 of the guide rail is in its extended position.

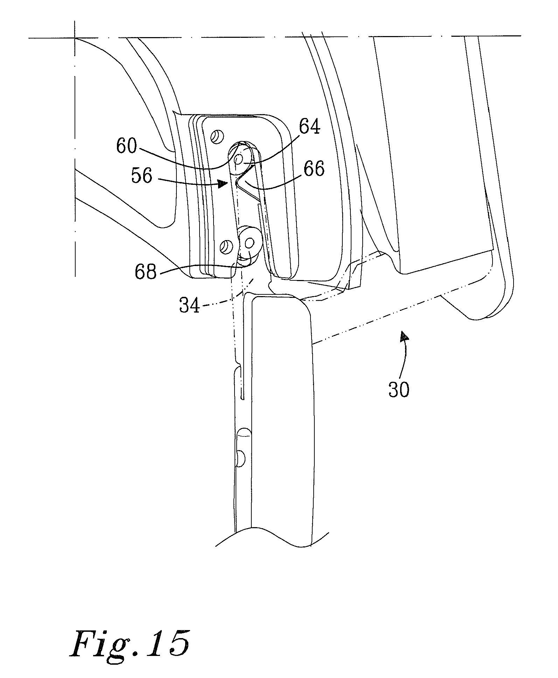

So that the lower tailgate lid 14 can be handed over to the upper tailgate lid 12, each locking slot 56 is provided with a locking pawl 66 which is biased such that it deflects into a retracted position to allow passage of the first guide element 64 as it approaches the abutment base 60 of the locking slot, but which returns to a blocking position once the first guide element has reached the abutment base. The blocking position is most clearly illustrated in Fig. 15. From its blocking position, the locking pawl 66 is releasable by means of a not-shown releasing mechanism which is activated by a signal from a not-shown electronic control unit. As is also derivable from Fig. 15, when the second leg 34 of the handover bracket 30 is fully inserted in the locking slot 56, a second guide element 68, for example in the form of a roller, positioned along the second leg 34 towards the intersection 36 of the first and second legs, is also accommodated within the locking slot.

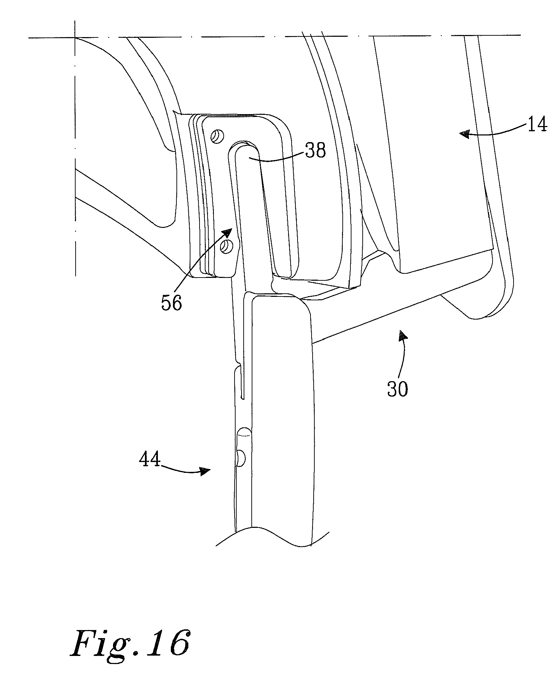

The relative position of the upper and lower tailgate lids when the second leg 34 of each handover bracket is in the position shown in Figs. 15 and 16 is illustrated in Fig. 3. In this position, and in accordance with the present invention, the lower tailgate lid 14 is in overlapping relationship with the upper tailgate lid 12. Thus, the interior-facing surface 15b of the lower tailgate lid 14 lies adjacent the exterior-facing surface 13a of the upper tailgate lid 12 such that at least 30 %, preferably at least 50 %, more preferably at least 70 % and most preferably at least 80 % of the surface area of the interior-facing surface 15b of the lower tailgate lid 14 overlaps the exterior-facing surface of the upper tailgate lid.

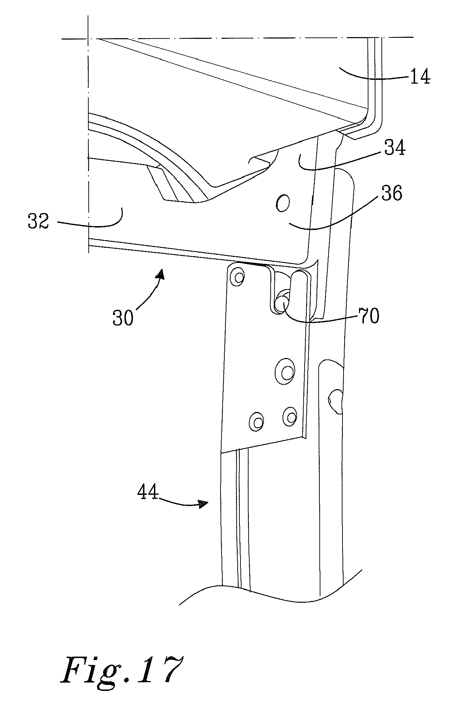

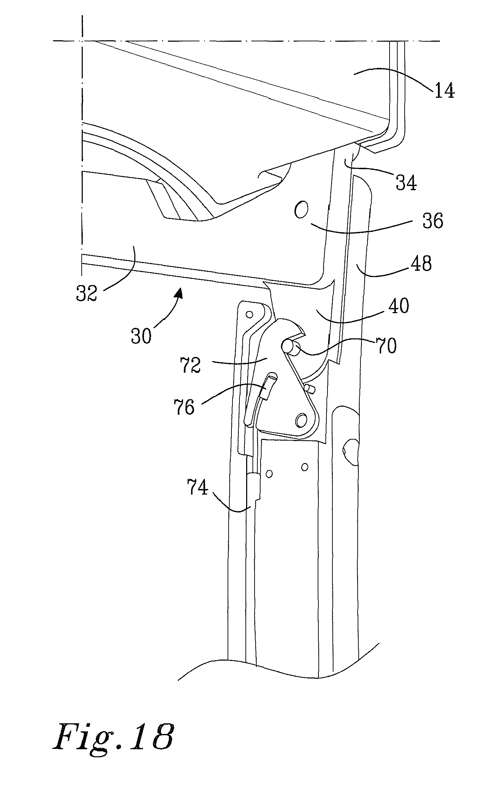

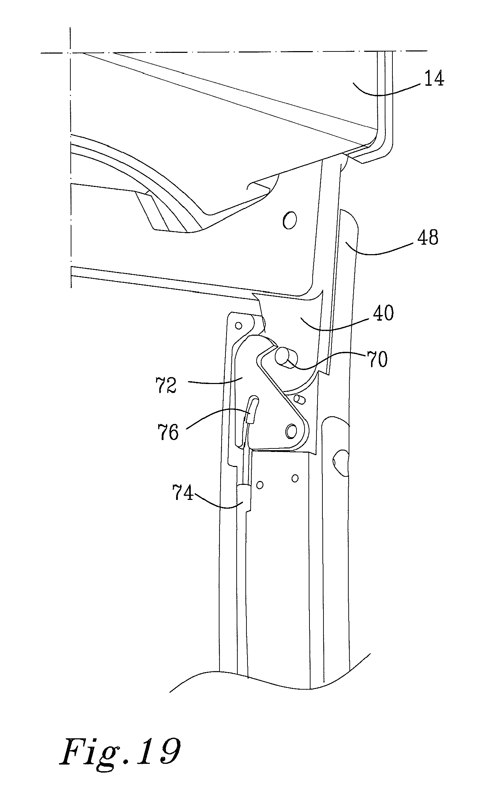

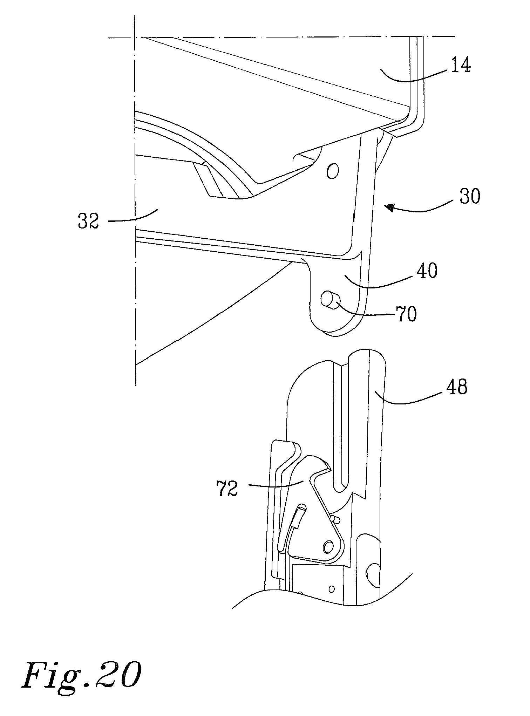

If the vehicle to which the tailgate arrangement 10 is fitted is to be used to transport flat loads, such as furniture flat packs, these may now be loaded through the opening created by the lower tailgate lid being in overlapping relationship with the upper tailgate lid. Should such loads extend rearwardly beyond the previously mentioned first vertical plane, it is conceivable that the vehicle be temporarily operated with the tailgate arrangement in the position shown in Fig. 3 provided that the load is securely fastened in the load area.
In the position illustrated in Fig. 3, the handover brackets 30 are engaged with both the upper tailgate lid 12 by means of the locking slots 56 and the guide rails 44 by means of the slides 48. So that the tailgate arrangement 10 can be fully opened, it is necessary that the handover brackets 30 be released from the slides 48 so that the upper tailgate lid 12, and with it the lower tailgate lid 14, can be pivoted by means of the hinge arrangement 20 about the first transverse edge 16 of the upper tailgate lid during a third opening phase. To this effect, and as is derivable from Figs. 17 to 20, the coupling end 40 of each handover bracket is provided with a locking pin 70 which can be engaged and released by a locking element 72 carried on the slide 48 of each guide rail. The locking element is displaceable by means of, for example, a command wire 74 from a locked position illustrated in Fig. 18 to a released position illustrated in Fig. 19 in which the slide 48 can be retracted to thereby release the handover bracket 30, as shown in Fig. 20. Displacement of the command wire 74 is in response to a signal sent from the electronic control unit. In the illustrated embodiment, the locking element is in the form of a hook mounted for pivotal displacement on the slide 48 against the action of a biasing spring 76. However, it is to be understood that the locking element and locking pins may be constituted by any components which are releasably engageable with each other.

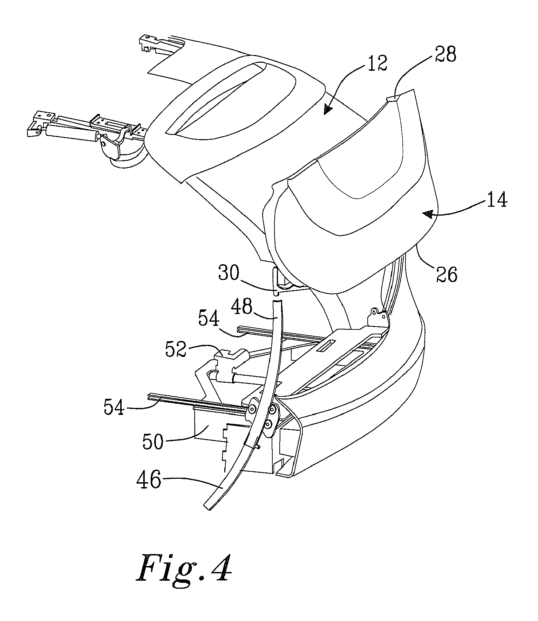

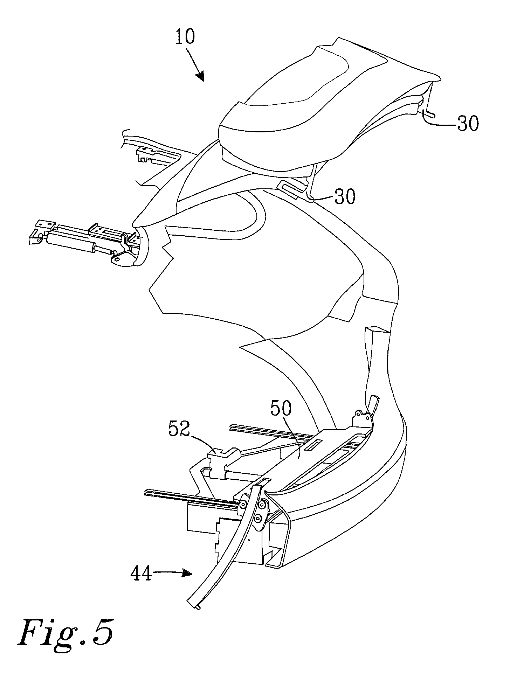

The released position of the handover brackets is illustrated in Fig. 4. From this position, the slides 48 are displaced along the fixed rails 46 of the guide rails to their retracted position at the same time that the upper tailgate lid, and with it the lower tailgate lid, is pivoted to occupy the fully opened position as illustrated in Fig. 5. In this position, unobstructed access to the load area of the vehicle can take place.

The sequence of operation of the tailgate arrangement 10 through its three opening phases from its fully closed position to its fully open position and thence back to its fully closed position will be briefly described in the following with reference to Figs. 1 to 9.

In the first opening phase, a control signal is received by the actuator 52 of the displaceable platform 50 to cause the actuator to effect lateral displacement of the platform from the fully closed position shown in Fig. 1 along the pair of guide tracks 54 until the lower tailgate lid 14 reaches the position shown in Fig. 2.

In the second opening phase, the slides 48 are caused to be displaced along the fixed rails 46 until the second legs 34 of the handover brackets 30 are engaged in the locking slots 56 in the upper tailgate lid 12, as shown in Fig. 3.

In the third opening phase, the locking element 72 on each slide 48 of the guide rails 44 is displaced by means of the command wire 74 so that the locking pin 70 on each handover bracket 30 is released (Fig 4). The slides 48 are then retracted. Simultaneously, or sequentially, the upper tailgate lid 12 and with it the lower tailgate lid 14 are pivoted by the hinge arrangement 20 until the tailgate arrangement occupies the fully opened position illustrated in Fig. 5.

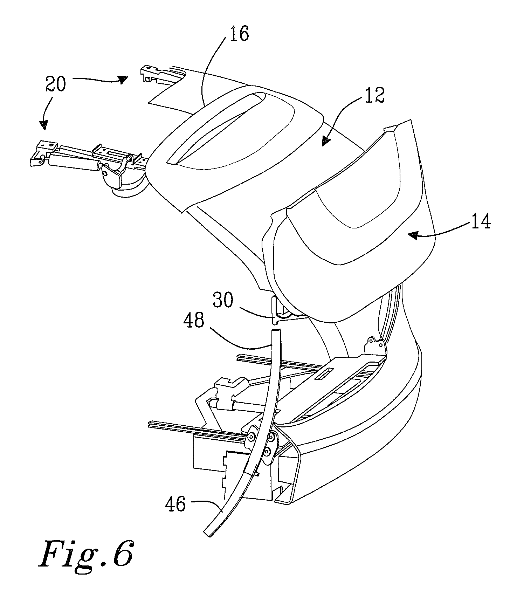

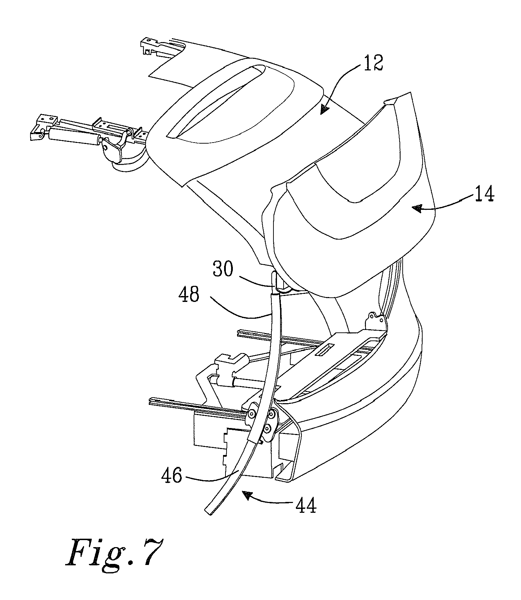

To close the tailgate arrangement 10, the upper tailgate lid 12 and with it the lower tailgate lid 14 are swung downwardly by the hinge arrangement until the upper tailgate lid is in its closed position as shown in Fig. 6. During this displacement, or, optionally, immediately thereafter, the slides 48 of the guide rails 44 are caused to slide along the fixed rails 46 from the retracted position to the extended position at which the coupling end 40 of each handover bracket 30 is brought into engagement with its respective slide 48. Thus, as the slide 48 approaches its extended position, the locking pin 70 on the coupling end 40 of the handover bracket displaces the locking element 72 against the action of the biasing spring 76 until the slide reaches its extended position at which the locking element 72 snaps back and engages with the locking pin 70. This position of the tailgate arrangement 10 is illustrated in Fig. 7.

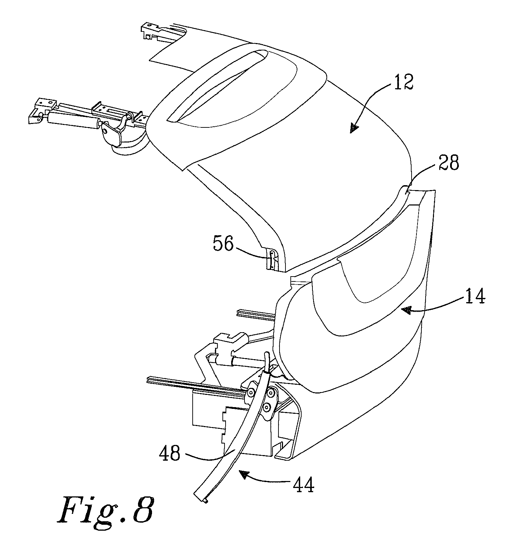

Upon engagement of the locking element 72 with the locking pin 70, a signal is sent to the releasing mechanism of the locking pawl 66 in the locking slot 56 on the upper tailgate lid 12 such that the locking pawl is retracted. Retraction of the locking pawl permits the second leg 34 of the handover bracket 30 to be withdrawn from the locking slot 56 as the slide 48 is displaced from its extended position to its retracted position. Fig. 8 illustrates the position of the tailgate arrangement with the slides 48 in their retracted position.

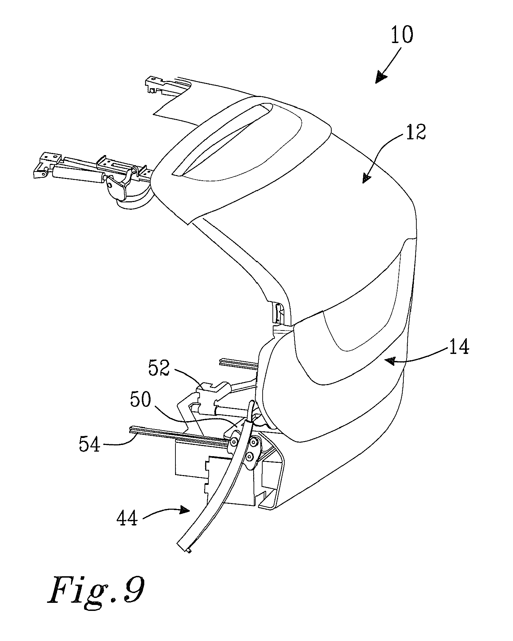

Thereafter, the tailgate arrangement is brought into its fully closed position by activation of the actuator 52 which effects lateral displacement of the platform 50 along the pair of guide tracks 54 until the lower tailgate lid 14 reaches the position shown in Fig. 9.

It is to be understood that the present invention is not limited to the embodiment described above and illustrated in the drawings, but that it may be varied within the scope of the appended claims. For example, the lower tailgate lid may be brought into overlapping relationship with the upper tailgate lid by providing a hinge arrangement along the second transverse edges of the lower tailgate lid and the upper tailgate lid. In such an embodiment, when the lower tailgate lid is in overlapping relationship with the upper tailgate lid, the exterior-facing surfaces of both lids are adjacent each other. In a further modification, it is conceivable that the lower tailgate lid 14 be exchangeable. Thus, since the lower tailgate lid is releasably connected to the slides 48 of the pair of guide rails 44 via the coupling end 40 of each handover bracket 30, the lower tailgate lid 14 may be disconnected from the slides 48 when the lower tailgate lid is in either its fully closed position shown in Fig. 1 (though with the upper tailgate lid 12 in its first opening mode) or in the Fig. 2 position at the end of the first opening phase. In either position, by activating the locking element 72 to disengage the locking pin 70, the lower tailgate lid with the handover brackets can be lifted from the guide rails 44. The thus removed lower tailgate lid could then be replaced by a different lower tailgate lid having, for example, an integrated bicycle rack, pram holder, storage box or any other suitable accessory.

### REFERENCE NUMERAL INDEX

- 10: vehicle tailgate arrangement
- 12: upper tailgate lid
- 13a: exterior-facing surface of upper tailgate lid
- 13b: interior-facing surface of upper tailgate lid
- 14: lower tailgate lid
- 15a: exterior-facing surface of lower tailgate lid
- 15b: interior-facing surface of lower tailgate lid
- 16: first transverse edge of upper tailgate lid
- 18: second transverse edge of upper tailgate lid
- 20: hinge arrangement
- 22: first hinge assembly
- 24: second hinge assembly
- 26: first transverse edge of lower tailgate lid
- 28: second transverse edge of lower tailgate lid
- 30: pair of handover brackets
- 32: first leg
- 34: second leg
- 36: intersection
- 38: insertion end
- 40: coupling end
- 42: distal end region
- 44: guide rail
- 46: fixed rail
- 48: slide
- 50: displaceable platform
- 52: actuator
- 54: pair of guide tracks
- 56: pair of locking slots
- 58: downwardly facing opening
- 60: abutment base
- 62: pair of tapered side walls
- 64: first guide element
- 66: locking pawl
- 68: second guide element
- 70: locking pin
- 72: locking element
- 74: command wire
- 76: biasing spring

## Claims

1. A vehicle tailgate arrangement (10) comprising an upper tailgate lid (12) and a lower tailgate lid (14), the arrangement being operable between a closed position and an open position to thereby access a load area in the vehicle, **characterized in that**, during opening, the lower tailgate lid (14) is arranged to be brought into overlapping relationship with the upper tailgate lid (12).

2. The vehicle tailgate arrangement (10) as claimed in claim 1, **characterized in that** the upper tailgate lid (12) has an exterior-facing surface (13a) and an interior-facing surface (13b), the lower tailgate lid (14) has an exterior-facing surface (15a) and an interior-facing surface (15b), and **in that** during said opening, the lower tailgate lid is (14) arranged to undergo an axial displacement such that at least an area of said interior-facing surface (15b) of the lower tailgate lid passes over a region of said exterior-facing surface (13a) of the upper tailgate lid.

3. The vehicle tailgate arrangement (10) as claimed in claim 2, **characterized in that** said axial displacement is non-rectilinear.

4. The vehicle tailgate arrangement (10) as claimed in any one of the preceding claims, **characterized in that** said upper tailgate lid (12) has a first transverse edge (16) and a second transverse edge (18), said lower tailgate lid (14) has a first transverse edge (26) and a second transverse edge (28), the second transverse edge of said upper tailgate lid being adjacent said second transverse edge of said lower tailgate lid when said tailgate arrangement (10) is in said closed position, said upper tailgate lid (12) being pivotally supported to said vehicle about its first transverse edge (16).

5. The vehicle tailgate arrangement (10) as claimed in claim 4, **characterized in that** said upper tailgate lid (12) is pivotal about its first transverse edge (16) prior to displacement of said lower tailgate lid (14).

6. The vehicle tailgate arrangement (10) as claimed in claim 4, **characterized in that** said upper tailgate lid (12) is pivotal about its first transverse edge (16) when said lower tailgate lid (14) is in said overlapping relationship with said upper tailgate lid.

7. The vehicle tailgate arrangement (10) as claimed in any one of claims 4 to 6, **characterized in that** in said closed position said second transverse edges (18, 26) of said upper and lower tailgate lids (12, 14) occupy a first vertical plane, said arrangement (10) being adapted such that, upon initial opening of said arrangement, said lower tailgate lid (14) is arranged to effect a lateral displacement substantially perpendicular to said first vertical plane.

8. The vehicle tailgate arrangement (10) as claimed in any one of claims 2 to 7, **characterized in that** said axial displacement of said lower tailgate lid (14) is arranged to take place along a pair of guide rails (44).

9. The vehicle tailgate arrangement (10) as claimed in claim 8, **characterized in that** each one of said pair of guide rails (44) comprises a fixed rail (46) and a slide (48), said slide being arranged for displacement along said fixed rail from a retracted position to an extended position.

10. The vehicle tailgate arrangement (10) as claimed in claim 9, **characterized in that** said lower tailgate lid (14) is provided with a pair of handover brackets (30) in the vicinity of its first transverse edge (26), each handover bracket being arranged for releasable cooperation with a respective slide (48) of said pair of guide rails (44).

11. The vehicle tailgate arrangement (10) as claimed in claim 10, **characterized in that** said upper tailgate lid (12) is provided with a pair of locking slots (56) in the vicinity of its second transverse edge (18), said slides (48) of said pair of guide rails (44) being adapted to deliver said handover brackets (30) to said locking slots and to cause said locking slots to receive said handover brackets when said slides are in said extended position in which the lower tailgate lid (14) has been brought into said overlapping relationship with the upper tailgate lid (12).

12. The vehicle tailgate arrangement (10) as claimed in claim 11, **characterized in that** each said handover bracket (30) is arranged to be released from its respective slide (48) of said pair of guide rails (44) once said locking slots (56) have received said handover brackets.

13. The vehicle tailgate arrangement (10) as claimed in claim 12, **characterized in that** said slides (48) are arranged to retract to said retracted position once said handover brackets (30) have been released.

14. The vehicle tailgate arrangement (10) as claimed in either claim 12 or claim 13, **characterized in that**, when said lower tailgate lid (14) has been brought into said overlapping relationship with the upper tailgate lid (12) and said handover brackets (30) have been released from said slides (48), said upper tailgate lid is arranged to be pivoted about its first transverse edge (16) to thereby occupy said open position.

15. The vehicle tailgate arrangement (10) as claimed in any one of claims 8 to 14, **characterized in that** said pair of guide rails (44) is mounted on a displaceable platform (50), said platform being arranged to effect said lateral displacement of said lower tailgate lid (14) during initial opening of said tailgate arrangement (10).

16. The vehicle tailgate arrangement (10) as claimed in claim 1, **characterized in that** during said opening, the lower tailgate lid (14) is arranged to undergo a pivotal displacement with respect to said upper tailgate lid (12).

17. A method of opening a vehicle tailgate arrangement (10), said arrangement comprising an upper tailgate lid (12) having a first transverse edge (16) and a second transverse edge (18), and a lower tailgate lid (14) having a first transverse edge (26) and a second transverse edge (28), said upper tailgate lid being arranged for pivotal displacement about its first transverse edge (16), said method comprising the steps of:
bringing the lower tailgate lid (14) into overlapping relationship with the upper tailgate lid (12), and
effecting pivotal displacement of the upper tailgate lid (12) about its first transverse edge (16).

18. The method as claimed in claim 17, wherein the step of bringing the lower tailgate lid (14) into overlapping relationship with the upper tailgate lid (12) comprises the substeps of:
effecting a lateral displacement of the lower tailgate lid (14) such that said second transverse edge (28) of said lower tailgate lid becomes offset relative to said second transverse edge (18) of the upper tailgate lid, and
effecting an axial displacement of said lower tailgate lid such that the lower tailgate lid adopts said overlapping relationship with the upper tailgate lid.

19. The method as claimed in claim 18, wherein the lower tailgate lid (14) is constrained to effect said axial displacement along a pair of guide rails (44).

20. The method as claimed in claim 19, wherein the lower tailgate lid (14) is released from said pair of guide rails (44) and is received by said upper tailgate lid (12) when the lower tailgate lid is in said overlapping relationship with the upper tailgate lid.
